# EUROPÄISCHE PATENTSCHRIFT

(11) **EP 0 616 933 B1**
(45) Veröffentlichungstag und Bekanntmachung des Hinweises auf die Patenterteilung: **13.11.1996**
(21) Anmeldenummer: 94104157.6
(22) Anmeldetag: 17.03.1994
(51) Int. Cl.: B61C 13/00, B62D 1/26

(54) **Transporteinheit einer Flurtransportanlage**
Transport unit of a ground level transport system
Unité de transport d'une installation de transport au sol

(30) Priorität: 20.03.1993 DE 4309009
(43) Veröffentlichungstag der Anmeldung: 28.09.1994
(73) Patentinhaber: AFT Automatisierungs- und Fördertechnik GmbH, D-79650 Schopfheim (DE)
(72) Erfinder: Geng, Manfred, D-79639 Grenzach-Wyhlen (DE); Wehrle, Andreas, Dipl.-Ing. (FH), D-79336 Herboltsheim (DE)
(74) Vertreter: Allgeier, Kurt

(56) Entgegenhaltungen:
- EP-A- 0 151 982
- DE-A- 2 044 400
- DE-A- 2 542 682

## Beschreibung

Die Erfindung bezieht sich auf Flurtransportanlagen mit in Vertiefungen in der Flur- oder Bodenebene eingelassenen Schienen und Stromleitern gemäß Oberbegriff des Anspruchs 1. Eine derartige Anlage ist aus EP-A-0 151 982 bekannt.

Bekannte Flurtransportanlagen dieser Art mit derartigen Transporteinheiten werden hauptsächlich innerhalb von Gebäuden, vorzugsweise in Fertigungs- und Lagerhallen benutzt, um beispielsweise grössere Werkstücke oder sperriges Lagergut zu befördern; auch sind diese Anlagen mit den Transporteinheiten in der Gross-Serien- oder Massenfertigung von beispielsweise Motorfahrzeugen einsetzbar. Die Schienen und Stromleiter sind vertieft angeordnet, jedoch eben mit der Flurebene, so dass sie von den Rädern nicht schienengebundener Fahrzeuge ruck- und stossfrei überfahren werden können.

Die bekannten Systeme dieser Art vereinigen vielfach mehrere Nachteile in sich, durch welche eine wünschenswerte universelle Nutzbarkeit und hohe Betriebssicherheit nicht ausreichend ermöglicht wird. Manche bekannte Systeme sind in ihrer räumlichen Auslegung ungünstig ausgebildet und dimensioniert; sie benötigen teilweise eine zu grosse Einbautiefe in den die Bodenebene bildenden Estrich. Daher muss in manchen Fällen die tragende Decken- oder Fundament-Konstruktion angefräst und dadurch geschwächt werden, wodurch statische Schwierigkeiten verursacht werden können. Auch ist in manchen Fällen eine wünschenswerte rasche Austauschbarkeit von Schienenteilen nicht vorgesehen und es kann der Verschmutzungsgefahr nicht genügend begegnet werden.

Aufgabe der Erfindung ist es, hier Abhilfe zu schaffen und in Verbindung mit einem geeigneten Schienensystem eine Ausbildungsweise von Transporteinheiten bereitzustellen, welche unter Vermeidung der obengenannten Nachteile neue verbesserte Einsatzbedingungen durch Nutzung verzweigter Fahrwegssysteme eröffnet. Ziel der Erfindung ist es, unter erheblicher Vereinfachung der technischen Mittel ein Höchstmass an Anpassungsfähigkeit an unterschiedliche Betriebsbedingungen mit hoher Betriebssicherheit und geringer Störanfälligkeit und Unfallgefahr zu vereinigen.

Ausgehend von den obenerwähnten gattungsgemässen Systemen dieser Art besteht die Erfindung in einer Transporteinheit, bei der
- eine sich in Fahrtrichtung erstreckende, waagrechte und von dem Chassis der Transporteinheit trennbare, um die Lenkachse schwenkbare Deichseleinheit, an welcher das Lageraggregat mit dem Antriebsmotor und einer zwischen diesem und dem Antriebsrad eingeschaltete Getriebeeinheit befestigt ist, sowie
- mit einem Schieberrahmen, an dem die Deichseleinheit angeschlossen ist, und der mittels beidseitigen Führungsflanschen in am Chassis befestigten Schieberführungen gehalten, von diesem lösbar und nach vorne herausfahrbar ist.

In einer bevorzugten Ausbildungsweise ist vorgesehen, dass sich die Deichseleinheit nach vorne in Fahrtrichtung erstreckt und von einem Tragarm gehalten ist. Es ist jedoch auch eine weitere Ausbildungsweise möglich, bei der sich ein Teil der Deichseleinheit entgegen der Fahrtrichtung nach hinten erstreckt; diese Ausbildungsweise ist vorteilhaft, wenn die Transporteinheit rückwärts gefahren wird.

Weiterhin ist vorgesehen, dass die Deichseleinheit mittels eines Drehkranzes bzw. einer Kugeldreheinheit an den Schieberahmen angeschlossen ist. Dadurch wird auch bei schweren Lasten die leichte Lenkbarkeit der Transporteinheit ermöglicht.

Von grosser Bedeutung für die Fernsteuerung der Transporteinheit ist die Massnahme, dass im Bereich des Endes einer oder beider Deichseln an einem Deichselkopf wenigstens ein in den Fahrweg-Kanal eingreifendes, als länglicher Gleitstein gestaltetes, drehbewegliches Führungselement angeordnet ist.

Durch die vorgenannten Massnahmen wird einerseits ein hohes Mass an Stabilität und Fahrweggenauigkeit erzielt und zugleich erreicht, dass bei Fahrwerkstörungen eine genaue Inspektion des gesamten Fahrwerks in kürzester Frist durchführbar oder das heraus gefahrene, mit der Deichseleinheit verbundende Fahrwerk als Ganzes problemlos gegen eine bereitgehaltene Reserve-Deichseleinheit innerhalb weniger Augenblicke austauschbar ist. Dadurch werden Betriebsstörungen und Ausfallzeiten auf einen Mindestumfang reduziert.

Besonders vorteilhaft erscheint die Massnahme, dass das Führungselement mittels eines fernsteuerbaren Antriebs drehbar und/oder seitenverstellbar ist. Dabei ist vorteilhaft, dass das in den Fahrweg-Kanal eingreifende und darin gleitende Führungselement an einem Deichselkopf am vorderen Ende der Deichsel oder zusätzlich auch am Ende des rückwärts gerichteten Teils der Deichseleinheitteils angeordnet, als länglicher Gleitstein gestaltet und drehbeweglich ausgebildet ist. Von grosser Bedeutung ist in diesem technischen Zusammenhang, dass das Führungselement mittels eines fernsteuerbaren Antriebs drehbar und/oder seitenverstellbar ausgebildet sein kann. Durch diese Massnahme kann die Transporteinheit auch in einem starkverzweigten Schienensystem - sogar auch bei nahezu rechtwinkligen Abzweigungen und engen Kurvenradien - zu jedem Zeitpunkt einen beliebig wählbaren Fahrweg verfolgen. Hierzu bedarf es nicht der üblichen Schienenweichen mit einer Weichenzunge.

Das Führungselement sucht sich die steuerungsmässig vorgegebene offene Kanaleinmündung einer zungenlosen Schienenweiche durch Flankenanlage des in die eine oder andere Richtung gedrehten und gegebenenfalls seitlich verschobenen Führungselements.

Zur Betriebssicherheit trägt die weitere Ausbildungsweise der Deichseleinheit dadurch bei, dass der Deichselkopf aus seiner Normalstellung entgegen einer Federwirkung auf einem Tragarm gleitend verschiebbar ist. Beim Auffahren auf ein beliebiges Hinderniss im Fahrweg, beispielsweise ein Brett oder ein Balken oder ein dgl. das Fahrwerk störender Widerstand, der niedriger ist als das Chassis, weicht der Deichselkopf entgegen der Federkraft zurück, und zugleich wird nach einem weiteren Erfindungsmerkmal durch einen Näherungssensor ein Steuersignal abgesetzt, welches die Fahrwegstörung meldet und u.U. die Transporteinheit stillsetzt.

Die Transporteinheit ist nach weiteren Erfindungsmerkmalen ein Räderfahrzeug, welches ausser den Antriebsrädern noch mit im Bereich der Seitenbegrenzung hinten beidseitig mit Stützrädern versehen ist; ausserdem können auch vorne zwei vom Antriebsrad beidseitig beabstandet angeordnete, im Bereich der Seitenbegrenzung des Chassis der Transporteinheit beidseitig gelagerte nicht angetriebene Stützräder vorgesehen sein.

Ferner kann es von Vorteil sein, wenn nach weiteren Merkmalen vorderen und/oder die hinteren Stützräder höhenverstellbar ausgebildet sind. Durch Verstellung im Sinne des Absenkens zumindest der vorderen Stützräder kann das Chassis mit den Antriebsrädern angehoben werden, so dass diese vom Fahrzeuggewicht völlig entlastet sind und die Deichseleinheit vom Chassis lös- und nach vorne leicht herausfahrbar ist.

Die Höhenverstellung der Stützräder kann durch Längsverschiebbarkeit von Schrägschlitz-Kulissenführungen erfolgen, mittels denen die Halterungen der Stützräder vertikal verstell- und arretierbar sind. Diese Längsverschiebbarkeit der Schrägschlitz-Kulissenführungen kann mittels Schraubspindel- oder Exzenterantrieben, oder aber durch einen Hydraulik-Antrieb durchführbar sein.

Ein zweckmässiges Merkmal ist auch darin zu erblicken, dass die Getriebeeinheit ein Teil des Lageraggregats ist, welches zwei beanstandet beidseitig angeordnete Antriebsräder aufweist, die mit der ein Ausgleichsgetriebe enthaltenden Getriebeeinheit durch Steckachsen gekuppelt sind.

Das Chassis als solches ist vorzugsweise als rechteckiges Rahmengestell ausgebildet, an welchem die Deichseleinheit und die Halterungen der Stützräder mit ihren Verstellvorrichtungen angebracht sind. Vorteilhafterweise ist nach einem weiteren Merkmal vorgesehen, dass die Deichseleinheit innerhalb eines entsprechend ihrem Schwenkbereich bemessen ausgesparten, nach oben durch eine Abdeckung abgeschlossenen Deichselraumes des Chassis angeordnet ist.

Die Transporteinheit ist zur Energieversorgung mit Stromabnehmern ausgerüstet, welche mit den im Boden verlegten Stromleitern zusammenwirken. Die weitere Ausbildung kann derart getroffen sein, dass innerhalb eines aus dem Chassis ausgesparten, überdeckten Heckraumes eine Stromabnehmereinheit mit wenigstens je einem Stromabnehmer für jeden Stromleiter sowie wenigstens einem in den Fahrweg-Kanal eingreifenden Führungselement angeordnet ist, wobei diese Stromabnehmereinheit vorzugsweise aus einer profilversteiften Grundplatte besteht, an welcher mittels Lenkerhebeln die als Gleitstücke ausgebildeten Stromabnehmer angelenkt, und an denen ferner die Führungselemente drehbeweglich gelagert sind. Durch Zusammenfassung dieser Elemente zu einer auf einer Grundplatte montierten Einheit wird deren Montage und Demontage vereinfacht und erleichtert. Darüber hinaus kann mit der Grundplatte ein Rechteck- oder Rund-Hohlprofil verbunden sein, welches aus einer auf einem am Chassis angeflanschten Trägerarm aufgeschobenen Normalposition nach hinten herauszieh- und von dem Chassis trennbar ist.

Durch diese Ausbildungsweise ist es möglich, die ganze Stromabnehmereinheit in wenigen Augenblicken vom Chassis zu lösen und nach hinten herauszufahren, um eventuell erforderliche Kontroll- oder Wartungsarbeiten durchzuführen oder - zur Vermeidung von Betriebsunterbrechungen - die Stromabnehmereinheit gegen eine Reserve-Einheit auszutauschen.

Eine wesentliche Besonderheit der erfindungsgemässen Transporteinheit besteht noch in einer am Chassis oder an der Stromabnehmereinheit befestigte, in den Fahrweg-Kanal eingelassene und nachgeführte Laschenkette von rechteckigem, dem Kanal entsprechenden und diesen ausfüllenden Querschnitt. Dabei ist weiter vorgesehen, dass die Laschenkette aus Kunststoffgliedern besteht, deren Laschenbolzen in den Kettenlaschen in beidseitigen, durch seitliche Deckplatten geschlossenen Langlöchern geführt sind und mit einem Stahlendstück versehen ist. Diese Schleppkette übt eine wichtige Funktion dahingehend aus, dass sie das Auffahren und Zusammenstossen von zwei aufeinanderfolgenden Transporteinheiten verhindern kann. Sobald sich eine nachfolgende Transporteinheit der vorausfahrenden über einen Sicherheitsabstand hinaus nähert, erhält der Näherungssensor der hinteren Transporteinheit Kontakt zum Ende der Schleppkette und löst ein Steuersignal aus, welches in verschiedener Weise verarbeitet werden kann. Es kann die nachfolgende Transporteinheit stillgesetzt oder deren Geschwindigkeit gedrosselt werden. Ferner ist Vorkehrung getroffen, dass sich die als Laschenkette ausgebildete, nachgeschleppte Kette nicht noch aus dem Fahrweg-Kanal hochhebt oder aufbäumt, wenn sie durch den Restfahrweg der nachfolgenden Transporteinheit ein Stück zusammengeschoben wird. Wegen der Führung der Laschenbolzen in Langlöchern ist die Kette stark verkürzbar, ohne nach oben aus dem Kanal aufzusteigen und möglicherweise Störungen oder Verletzungen von in deren Bereich sich bewegenden Personen hervorzurufen.

Die erfindungsgemäss ausgebildeten Transporteinheiten sind in beliebiger Anzahl auf weitläufig und vielfach verzweigten Schienensystemen nach starren oder variablen Wef- und Zeitsteuervorgaben zur Lösung vielseitig strukturierter Förderaufgaben und vorzugsweise auch in der Fliessfertung zu in den Förderweg einbezogenen Fertigungsplattformen verwendbar.

Weitere Besonderheiten und Merkmale sind anhand der in der Zeichnung dargestellten und im folgenden näher beschriebenen Ausführungsbeispiele erläutert. Es zeigen
- Fig. 1: eine perspektivische Ansicht der Elementgruppen A und B des Fahrwerks der Transporteinheit,
- Fig. 2: eine Draufsicht auf das Fahrwerk gem. Fig. 1,

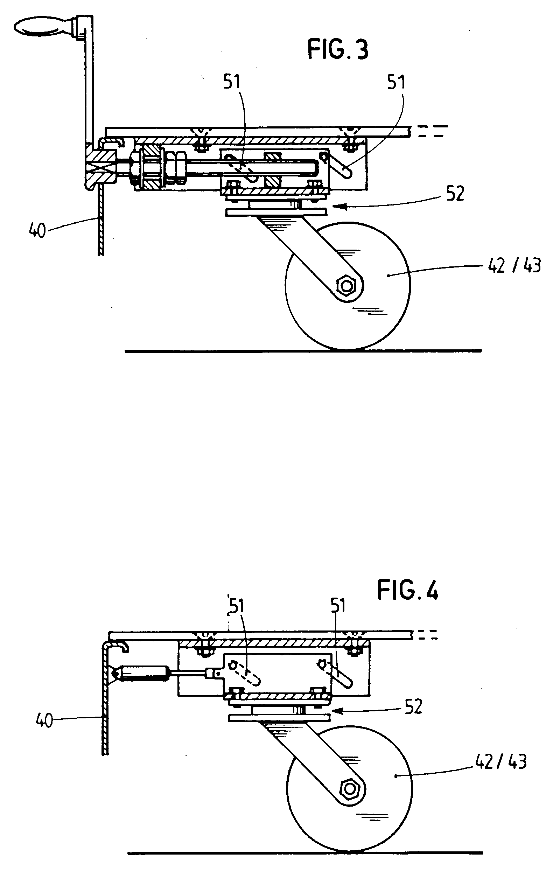

- Fig. 3: die Anordnung der Stützräder,
- Fig. 4: die Anordnung der Stützräder in abgewandelter Ausbildung,
- Fig. 5: eine Einzelheit bei "Y" gem. Fig. 6,
- Fig. 6: eine Einzelheit bei "Z" gem. Fig. 2,
- Fig. 7: eine Einzelheit bei "XZ" gem. Fig. 2 in perspektivischer Darstellung,
- Fig. 8: die Einzelheit bei "XZ" gem. Fig. 7 in Draufsicht,
- Fig. 9: die Laschenkette und deren Befestigung,
- Fig. 10: einen Schnitt C-C gem. Fig. 8.

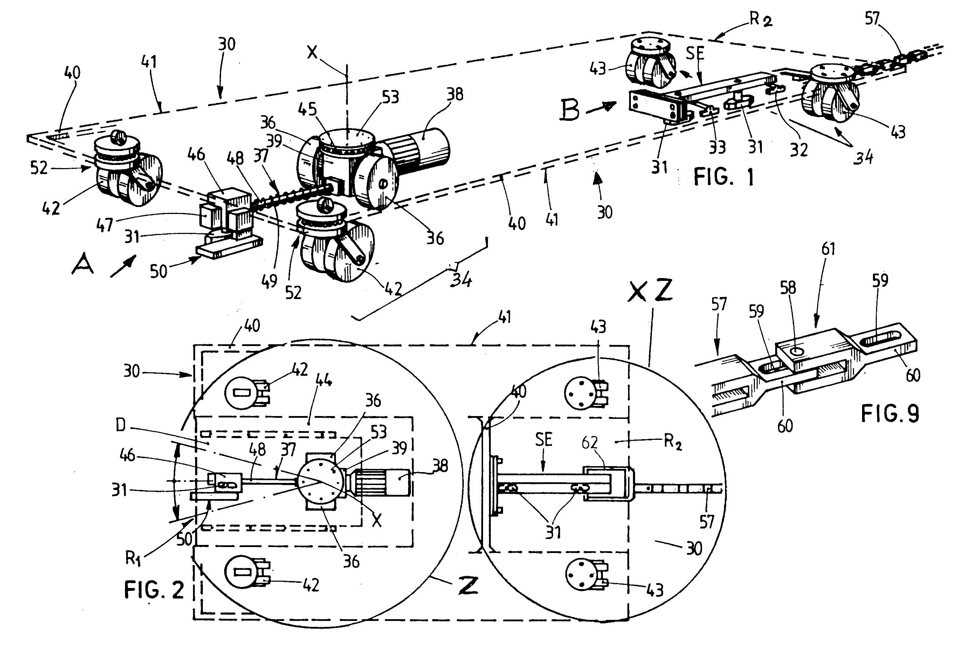

Die Elementgruppen A und B des Fahrwerks 34 sind aus den Fig. 1 und 2 ersichtlich.

Die Elementgruppe A umfasst den lenkbaren vorderen Fahrwerksteil, der im wesentlichen aus den Antriebsrädern 35 und den Stützrädern 42 besteht. Der kurvengängig lenkbare Fahrwerksteil ist um die vertikale Lenkachse X in einem begrenzten Winkel drehbar und mittels eines Lageraggregats 53 mit einer Kugeldreheinheit 45 an einer Deichseleinheit D - s. Fig. 2, 5 und 6 - nach vorne herausziehbar am Chassis 40 angeordnet.

Mit dem Lageraggregat 53 verbunden ist die Getriebeeinheit 39, welche die nicht näher dargestellten Lager der beidseitigen Antriebsräder 36 aufweist, deren Achsen über ein Ausgleichsgetriebe mit dem Antriebsmotor 38 verbunden sind. Mit dem Lageraggregat ist ferner die Deichsel 37 verbunden, an welcher aus seiner dargestellten Normalstellung entgegen der Fahrtrichtung und der Rückstellkraft der Schraubenfeder 49 der Deichselkopf 46 verschiebbar geführt ist. Am Deichselkopf 46 ist ein Führungselement 31 um eine senkrechte Achse verschwenkbar gelagert. Mittels eines Antriebs 47 kann die Verschwenkbewegung des Führungselements 31 ferngesteuert und dadurch beim Befahren von Weichen der Fahrweg gewählt werden. Ausserdem ist am Deichselkopf 46 ein Annäherungssensor 50 angebracht, welcher Distanzsignale von einer vorausfahrenden Transporteinheit 30 aufnimmt und zur Vermeidung des Auffahrens den Antriebsmotor 38 stillsetzt oder dessen Drehzahl reduziert. Um Beschädigungen zu vermeiden kann der Deichselkopf 46 bei einem unvermeidlichen Auffahren entgegen der Schraubenfeder 49 zurückweichen.

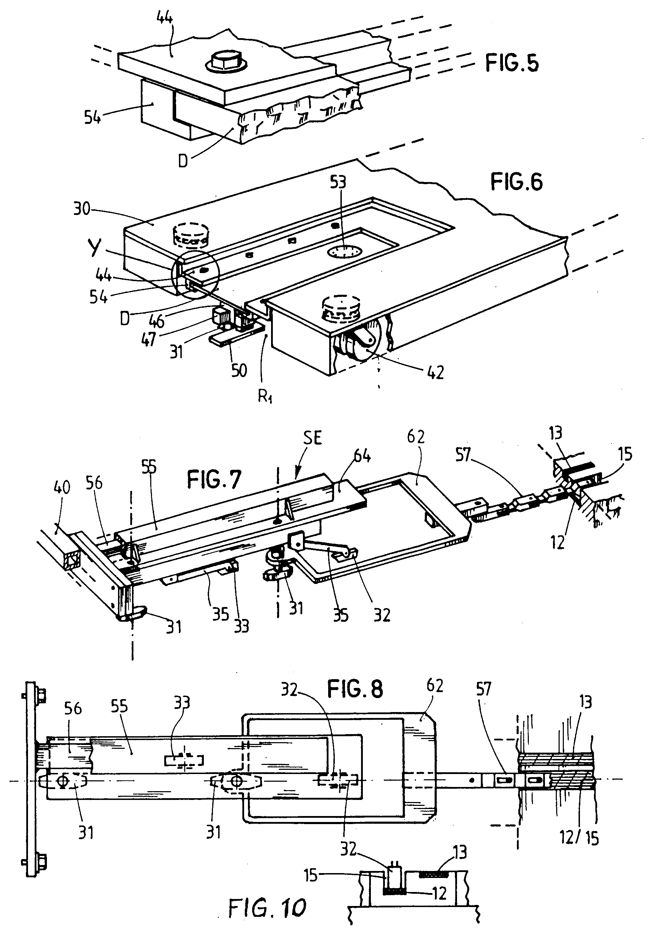

Der vorstehend beschriebene kurvengängig lenkbare Fahrwerksteil der Elementgruppe A ist in einem als Deichselraum R1 bezeichneten Ausschnitt des Chassis 40 angeordnet und als Deichseleinheit D bezeichnet. Wie aus den Fig. 5 und 6 ersichtlich, ist an der Deichseleinheit D das Lageraggregat 53 angebracht. Die Deichseleinheit D ist in einer Schieberführung 54 gehalten und mittels Verschraubungen festgeklemmt; sie ist nach Lösen der Klemmung nach vorne herausziehbar, so dass Wartungsarbeiten ausgeführt werden können.

Die Elementgruppe B umfasst die Stromabnehmereinheit SE und die hinteren Stützräder 43, wie diese in den Fig. 1 und 2 erkennbar sind. Auch die Stromabnehmereinheit SE ist herausziehbar ausgebildet, so dass Wartungsarbeiten unter optimalen Bedingungen ausgeführt werden können. Wie aus Fig. 7 hervorgeht, ist zu diesem Zweck am Chassis 40 ein Trägerarm 56 angeflanscht, mit dem teleskopartig das Hohlprofil 55 einsteckbar verbunden ist. In der Draufsicht gem. Fig. 8 ist erkennbar, dass der Trägerarm 56 aussermittig angeordnet ist, um die Lagerung und Zugänglichkeit der mittigen Stromabnehmerorgane, der Stromabnehmer 32, 33 mit ihren Lenkerhebeln 35 sowie der Führungselemente 31 zu ermöglichen. Diese sind an einer Grundplatte 64 montiert, welche an dem erwähnten Hohlprofil 55 befestigt ist.

Um die Achse des hinteren Führungselements 31 schwenkbar ist ferner der Schwenkrahmen 64 angeordnet, an welchem die Laschenkette 57 (Fig.9) angeschlossen ist. Diese läuft versenkt im Fahr wegkanal 15, wie in Fig. 7 erkennbar ist. Sie erfüllt die Aufgabe, einen Mindestabstand zwischen zwei aufeinanderfolgenden Transporteinheiten sicherzustellen. Wie aus Fig. 9 erkennbar, weisen die Kettenlaschen 60 Langlöcher 59 auf, in denen die Kettenbolzen 58 längsverschiebbar sind, so dass sich die Kette zusammenschiebend verkürzen kann, wenn sich eine Transporteinheit zu sehr annähert, und zwar ohne dass die Gefahr besteht, dass die Kette hochsteigt und Menschen oder Sachen gefährdet.

Beidseitig im Bereich der Seitenbegrenzung 41 des Chassis 40 sind Halterungen 52 für die Stützräder 42 angeordnet. Diese sind mittels nicht näher dargestellter Kugeldreheinheiten oder dgl. Drehlagern bei Kurvenfahrt dreh- und selbstlenkbar, da ihre vertikale Drehachse in Fahrtrichtung vor den Lagerachsen der Stützräder 42 liegt.

Die vorderen Stützräder 42 wie auch die hinteren Stützräder 43 sind höhenverstellbar ausgebildet. Durch diese Vorkehrung ist es möglich, die Elementgruppen A und/oder B durch Anheben des Chassis 40 mit dem Fahrwerk 34 anzuheben.

## Patentansprüche

1. Transporteinheit einer Flurtransportanlage mit in Vertiefungen in der Flur- oder Bodenebene eingelassenen Schienen und Stromleitern zur Zuführung der Antriebsleistung und mit wenigstens zwei Laufrädern und
a. wenigstens zwei mit den Stromleitern zusammenwirkenden Stromabnehmer-Gleitstücken,
b. wenigstens zwei in einem vertieften, den Fahrweg beschreibenden Kanal zum Gleitenvorgesehenen, mit dem Chassis verbundenen Führungselementen und
c. wenigstens einem mittig angeordneten, in einem um eine senkrechte Lenkachse (x) drehbaren Lageraggregat (53) gelagerten Antriebsrad (36),
gekennzeichnet
d. durch eine sich in Fahrtrichtung erstreckende, waagrechte und von dem Chassis (40) der Transporteinheit (30) trennbare, um die Lenkachse (x) schwenkbare Deichseleinheit (D), an welcher das Lageraggregat (53) mit dem Antriebsmotor (38) und einer zwischen diesem und dem Antriebsrad (36) eingeschaltete Getriebeeinheit (39) befestigt ist,
e. durch einen Schieberrahmen (44), an den die Deichseleinheit (D) angeschlossen ist, und der mittels beidseitigen Führungsflanschen in am Chassis (40) befestigten Schieberführungen (54) gehalten, von diesem lösbar und nach vorne aus dem Chassis herausfahrbar ist.

2. Transporteinheit nach Anspruch 1, dadruch gekennzeichnet, dass die Deichseleinheit (D) sich nach vorne in Fahrtrichtung erstreckt und von einem Tragarm (48) gehalten ist.

3. Transporteinheit nach Anspruch 1, dadurch gekennzeichnet, dass ein Teil der Deichseleinheit (D) entgegen der Fahrtrichtung nach hinten erstreckt.

4. Transporteinheit nach Anspruch 3, dadurch gekennzeichnet, dass die Deichseleinheit (D) mittels eines Drehkranzes bzw. einer Kugeldreheinheit (45) an den Schieberahmen (44) angeschlossen ist.

5. Transporteinheit nach Anspruch 1, dadurch gekennzeichnet, dass im Bereich des Endes einer oder beider Deichseln (37) an einem Deichselkopf (46) wenigstens ein in den Fahrweg-Kanal (15) eingreifendes, als länglicher Gleitstein gestaltetes, drehbewegliches Führungselement (31) angeordnet ist.

6. Transporteinheit nach Anspruch 5, dadurch gekennzeichnet, dass das Führungselement (31) mittels eines fernsteuerbaren Antriebs (47) drehbar und/oder seitenverstellbar ist.

7. Transporteinheit nach Anspruch 5, dadurch gekennzeichnet, dass der Deichselkopf (46) aus seiner Normalstellung entgegen einer Federwirkung auf einem Tragarm (48) gleitend verschiebbar ist.

8. Transporteinheit nach Anspruch 7, dadurch gekennzeichnet, dass der Tragarm (48) ein Rundrohrprofil aufweist und die Federwirkung durch eine Schraubenfeder (49) aufgebracht wird.

9. Transporteinheit nach Anspruch 5, dadurch gekennzeichnet, dass der Deichselkopf (46) mit einem vor dem Auffahren auf ein Hindernis ein Steuersignal auslösenden Annäherungssensor (50) ausgerüstet ist.

10. Transporteinheit nach Anspruch 1, dadurch gekennzeichnet, wenigstens zwei vom Antriebsrad (36) seitlich beabstandet angeordnete, im Bereich der Seitenbegrenzung (41) des Chassis (40) der Transporteinheit (30) beidseitig gelagerte nicht angetriebene Schützräder.

11. Transporteinheit nach Anspruch 1, dadurch gekennzeichnet, dass im Bereich der Seitenbegrenzung (41) der Transporteinheit (30) in Fahrtrichtung vorne und hinten beidseitig Stützräder (42, 43) angeordnet sind.

12. Transporteinheit nach Anspruch 1, dadurch gekennzeichnet, dass die Getriebeeinheit (39) ein Teil des Lageraggregats (53) ist, welches zwei beanstandet beidseitig angeordnete Antriebsräder (36) aufweist, die mit der ein Ausgleichsgetriebe enthaltenden Getriebeeinheit (39) durch Steckachsen gekuppelt sind.

13. Transporteinheit nach Anspruch 11, dadurch gekennzeichnet, dass die vorderen und/oder die hinteren Stützräder (42, 43) höhenverstellbar ausgebildet sind.

14. Transporteinheit nach Anspruch 13, gekennzeichnet durch Versschiebbarkeit von Schrägschlitz-Kulissenführungen (51), mittels denen die Halterungen (52) der Stützräder (42, 43) vertikal verstellbar und arretierbar sind.

15. Transporteinheit nach Anspruch 14, dadurch gekennzeichnet, dass die Schrägschlitz-Kulissenführungen (51) mittels Schraubspindel- oder Exzenterantrieb oder aber mittels Hydraulik-Antrieb längsverschiebbar sind.

16. Transporteinheit nach wenigstens einem der Ansprüche 1 bis 13, dadurch gekennzeichnet, dass die Deichseleinheit (D) innerhalb eines entsprechend ihrem Schwenkbereich bemessen ausgesparten, nach oben durch eine Abdeckung (70) abgeschlossenen Deichselraumes (R1) des Chassis (40) angeordnet ist.

17. Transporteinheit nach Anspruch 1, dadurch gekennzeichnet, dass innerhalb eines aus dem Chassis (40) ausgesparten, überdeckten Heckraumes (R2) eine Stromabnehmereinheit (SE) mit wenigstens je einem Stromabnehmer (32, 33) für jeden Stromleiter (12, 13) sowie wenigstens einem in den Fahrweg-Kanal (15) einzugreifenden Führungselement (31) angeordnet ist.

18. Transporteinheit nach Anspruch 17, dadurch gekennzeichnet, dass die Stromabnehmereinheit (SE) aus einer profilversteiften Grundplatte (64) besteht, an welcher mittels Lenkerhebeln (35) die als Gleitstücke ausgebildeten Stromabnehmer (32, 33) angelenkt, und an denen ferner die Führungselemente (31) drehbeweglich gelagert sind.

19. Transporteinheit nach Anspruch 18, gekennzeichnet durch ein mit der Grundplatte (64) verbundenes Rechteck- oder Rund-Hohlprofil (55), welches aus einer auf einem am Chassis (40) angeflanschten Trägerarm (56) aufgeschobenen Normalposition (NP) nach hinten herauszieh- und von dem Chassis (40) trennbar ist.

20. Transporteinheit nach den Ansprüchen 1 und 17, gekennzeichnet durch eine am Chassis (40) oder an der Stromabnehmereinheit (SE) befestigte, in den Fahrweg-Kanal (15) einzulassende und nachzuführende Laschenkette (57) von rechteckigem, dem Kanal (15) entsprechenden Querschnitt.

21. Transporteinheit nach Anspruch 20, dadurch gekennzeichnet, dass die Laschenkette (57) aus Kunststoffgliedern besteht, deren Laschenbolzen (58) in den Kettenlaschen (60) in beidseitigen, durch seitliche Deckplatten geschlossenen Langlöchern (59) geführt sind und mit einem Stahlendstück (61) versehen ist.

## Claims

1. Transport unit of a ground level transport system comprising some rails and current conductors, embedded into the ground or floor level, to feed the driving power and with two or more running wheels and
a. at least two current collector sliders that cooperate with the current conductors,
b. at least two guiding elements linked to the chassis and provided for sliding in a deepened channel describing the travel way and with
c. at least one driving wheel (36), centrally arranged and lodged in a bearing unit (53) slewable around a vertical guiding axis (x),
characterized
d. by a horizontal pole assembly (D) extending into the direction of motion, separable from the chassis (40) of the transport unit (30) and slewable around the guiding axis (x), to which have been secured the bearing unit (53) with the driving motor (38) and a gearbox (39) to be found between this motor and the driving wheel (36), and further
e. by a slide frame (44) to which the pole assembly (D) has been linked, and this frame is held in slide guides (54), which have been secured to the chassis (40) by means of the guiding flanges arranged at both sides, is detachable from this chassis (40) and movable ahead from the latter.

2. Transport unit according to claim 1, characterized in
that the pole assembly (D) extends ahead in the direction of motion, and is held by a strap (48).

3. Transport unit according to claim 1, characterized in
that a part of the pole assembly (D) extends to the rear, contrary to the direction of motion.

4. Transport unit according to claim 3, characterized in
that the pole assembly (D) has been linked to the slide frame (44) by means of a live ring or a ball bearing slowing rim (45).

5. Transport unit according to claim 1, characterized in
that in the sphere of the end of one or both poles (37) at least one slewable guiding element (31), engaging the travel way channel (15) and designed as an oblong slider, has been arranged at a pole head (46).

6. Transport unit according to claim 5, characterized in
that the guiding element (31) can be slewed and/or laterally adjusted by means of a remote-controllable drive (47).

7. Transport unit according to claim 5, characterized in
that the pole head (46) can be shifted on a strap (48) in a sliding manner opposite to the action of a spring, out of its home position.

8. Transport unit according to claim 7, characterized in
that the strap (48) shows a circular tube profile and that the spring action is due to a coil spring (49).

9. Transport unit according to claim 5, characterized in
that the pole head (46) has been equipped with a proximity sensor (50) releasing a control signal prior to colliding with an obstacle.

10. Transport unit according to claim 1, characterized in
that at least two non-driven support wheels have been provided, arranged at a certain lateral distance from the driving wheel (36) and lodged at both sides within the sphere of the lateral limit (41) of the chassis (40) pertaining to the transport unit (30).

11. Transport unit according to claim 1, characterized in
that within the sphere of the lateral limit (41) of the transport unit (30), in the direction of motion, some support wheels (42, 43) have been arranged at both sides, in the front and in the rear.

12. Transport unit according to claim 1, characterized in
that the gearbox (39) represents a part of the bearing unit (53) showing two driving wheels (36) bilaterally arranged at a certain distance and coupled with the gearbox (39) by some full floating axles, this box comprising an equalizing gear.

13. Transport unit according to claim 11, characterized in
that the front and/or rear support wheels (42, 43) have been designed for vertical adjustment.

14. Transport unit according to claim 13, characterized by
the shiftable skewed-slot link guides (51) allowing the holders (52) of the support wheels (42, 43) to be vertically adjusted and locked.

15. Transport unit according to claim 14, characterized in
that the skewed-slot link guides (51) are longitudinally shiftable by means of a screw rod or eccentric drive or by a hydraulic drive.

16. Transport unit according to at least one of the claims
1 to 13, characterized in
that the pole assembly (D) has been arranged within the pole section (R1) of the chassis (40), said section being recessed in accordance with the slewing range of the pole assembly and closed above by a cover (70).

17. Transport unit according to claim 1, characterized in
that within a rear section (R2), recessed in the chassis (40) and covered, a current collector assembly (SE) has been arranged with at least one collector for each current conductor (12, 13) and at least one guiding element (31) to engage the travel way channel (15).

18. Transport unit according to claim 17, characterized in
that the current collector assembly (SE) consists of a profile-stiffened base plate (64) to which the current collectors (32, 33), designed as sliders, have been linked using some control arms (35), these collectors showing the guiding elements (31) being slewably lodged at the assembly.

19. Transport unit according to claim 18, characterized by
a rectangular or circular hollow profile (55), connected with the base plate (64), which can be pulled out backward and separated from the chassis (40) in a standard position (NP) slided on a strap (56) flanged to the chassis (40).

20. Transport unit according to claims 1 and 17,
characterized by
an articulated chain (57), fixed to the chassis (40) or to the current collector assembly (SE), of which the rectangular, cross-section corresponds to the travel way channel (15), this chain to be sunk into said channel (15) and trailed.

21. Transport unit according to claim 20, characterized in
that the articulated chain (57) consists of plastic links of which the bolts (58) are guided, within the link plates (60), in oblong holes (59) arranged at both sides and closed with lateral cover plates, this chain being provided with a steel end (61).

## Revendications

1. Unité de transport d'une installation de transport au sol
comportant des rails et des conducteurs pour l'alimentation de la puissance motrice, encastrés dans des creux au niveau du sol ou du plancher, ainsi que deux roues mobiles au minimum, et
a. au moins deux coulisseaux à prise de courant coopérant avec les conducteurs,
b. au moins deux éléments de guidage reliés au châssis et prévus pour le glissement dans un conduit évidé décrivant la voie de roulement, et
c. au moins une seule roue d'entraînement (36) disposée au milieu et installée dans un bloc de logement (53) pivotant autour d'un axe de guidage vertical (x),
caractérisée par
d. un ensemble de timon horizontal (D) s'étendant en direction de roulement, séparable du châssis (40) de l'unité de transport (30) et pivotant autour de l'axe de guidage (x), auquel a été fixé le bloc de logement (53) avec le moteur d' entraînement (38) et le bloc d engrenage (39) se trouvant entre ce moteur et la roue d'entraînement (36),
et par
e. un cadre de coulisse (44) auquel a été relié l'ensemble de timon (D) et qui, grâce aux brides de guidage disposées des deux côtés, est tenu en des guide-coulisse (54) fixés au châssis (40), cadre détachable de ce dernier pour l'en sortir en avant.

2. Unité de transport selon revendication 1, caractérisée
par ce que l'ensemble de timon (D) s'étendant en avant en direction de roulement, est tenu par un élément porteur (48).

3. Unité de transport selon revendication 1, caractérisée
par ce qu'une partie de l'ensemble de timon (D) s'étend en arrière, opposée à la direction de roulement.

4. Unité de transport selon revendication 3, caractérisée
par ce que l'ensemble de timon (D) est relié au cadre de coulisse (44) moyennant une couronne de pivotement ou un élément pivotant à billes (45).

5. Unité de transport selon revendication 1, caractérisée
par ce qu'au domaine du bout d'un seul ou de deux timons (37), soit à une tête de timon (46), au moins un seul élément de guidage pivotant (31) a été disposé, élément conçu comme glisseur longitudinal entrant dans le conduit de voie de roulement (15).

6. Unité de transport selon revendication 5, caractérisée
par ce que l'élément de guidage (31) est pivotable et/ou latéralement réglable grâce à un entraînement (47) équipé pour télécommande.

7. Unité de transport selon revendication 5, caractérisée
par ce que la tête de timon (46) pourra se déplacer en glissant de sa position normale sur un élément porteur (48), contrairement à l'effet d un ressort.

8. Unité de transport selon revendication 7, caractérisée
par ce que l'élément porteur (48) présente un profil de tube circulaire et que l'effet de ressort se produit par un ressort à boudin (49).

9. Unité de transport selon revendication 5, caractérisée
par ce que la tête de timon (46) a été munie d'un détecteur proximité (50) déclenchant un signal de commande avant de tamponner un obstacle.

10. Unité de transport selon revendication 1, caractérisée
par ce qu'on a prévu au moins deux roues support non-attaquées, disposées à une certaine distance latérale de la roue d'entraînement (36) et logées des deux côtés dans le domaine de la limitation latérale (41) du châssis (40) de l'unité de transport (30).

11. Unité de transport selon revendication 1, caractérisée
par ce que des roues support (42, 43) ont été disposées dans la zone de la limitation latérale (41) de l'unité de transport (30), soit en direction de roulement, avant et arrière, des deux côtés.

12. Unité de transport selon revendication 1, caractérisée
par ce que le bloc d'engrenage (39) fait partie du bloc de logement (53) présentant deux roues d' entraînement (36), disposées des deux côtés à une certaine distance et accouplées au bloc d'engrenage (39) comportant un engrenage compensateur, par des demi-arbres.

13. Unité de transport selon revendication 11, caractérisée
par ce que les roues support (42, 43) avant et/ou arrière ont été conçues telles qu'elles pourront être ajustées en hauteur.

14. Unité de transport selon revendication 13, caractérisée
par des guides de coulisse à lente oblique (51) déplaçables et permettant à l'opérateur d'ajuster les dispositifs de fixation (52) des roues support (42, 43) verticalement et de les arrêter.

15. Unité de transport selon revendication 14, caractérisée
par ce que les guides de coulisse à fente oblique (51) sont longitudinalement déplaçables ou par commande de broche a vis respectivement commande excentrique ou par commande hydraulique.

16. Unité de transport selon, au moins, une des
revendications 1 à 13, caractérisée par ce
que l'ensemble de timon (D) a été disposé dans un creux à timon (R1) du châssis (40), creux fermé en haut par un recouvrement (70), dimensionné et réserve suivant la gamme de pivotement de cet ensemble.

17. Unité de transport selon revendication 1, caractérisée
par ce qu'en dedans d'un creux arrière recouvert (R2), réservé du châssis (40), un ensemble de prises de courant (SE) a été disposé, ensemble comportant, au moins, une prise (32, 33) pour chaque conducteur (12, 13) ainsi qu'un seul ou plusieurs éléments de guidage (31) qui devront entrer dans le conduit de voie de roulement (15).

18. Unité de transport selon revendication 17, caractérisée
par ce que l'ensemble de prises de courant (SE) comporte une plaque de base (64) renforcée par des profilés, a laquelle les prises de courant (32, 33), réalisées comme coulisseaux, ont été articulées moyennant des leviers de commande (35), et à cet ensemble de prises, les éléments de guidage (31) ont été logés de manière orientable.

19. Unité de transport selon revendication 18, caractérisée
par un profilé creux rectangulaire ou circulaire (55) relié à la plaque de base (64), lequel pourra se retirer en arrière et se détacher du châssis (40) à partir d'une position normale (NP) obtenue en poussant sur un élément porteur (56) bridé au châssis (40).

20. Unité de transport selon les revendications 1 et 17,
caractérisée par une chaîne articulée (57) de coupe rectangulaire et correspondant au conduit voie de roulement (15), chaîne fixée au châssis (40) ou à l'ensemble de prises de courant (SE) et à insérer dans ce conduit et à traîner.

21. Unité de transport selon revendication 20, caractérisée
par ce que la chaîne articulée (57) consiste en des éléments en matière synthétique dont les boulons (58) se trouvant dans des maillons (60), se guident en des trous oblongs (59) disposés des deux côtés et fermés par des plaques de recouvrement latérales, chaîne qui a été pourvue d'un bout d'acier (61).
